# FASCICULE DE BREVET EUROPEEN

(11) **EP 4 004 358 B1**
(45) Date de publication et mention de la délivrance du brevet: **26.07.2023**
(21) Numéro de dépôt: 20775387.2
(22) Date de dépôt: 27.08.2020
(51) Int. Cl.: F02K 1/12, F02K 1/82, F02K 3/10

(54) **COUPLE VOLET CONVERGENT-VOLET DIVERGENT POUR TUYERE DE TURBOREACTEUR A GEOMETRIE VARIABLE DONT LES VOLETS COMPRENNENT CHACUN UN CONDUIT DE CIRCULATION D'AIR DE REFROIDISSEMENT**
KONVERGENT-DIVERGENTES KLAPPENPAAR FÜR EINE TURBINEN-LUFTSTRAHL-TRIEBWERKSDÜSE MIT VARIABLER GEOMETRIE, DEREN KLAPPEN JEWEILS EINEN KÜHLLUFTUMLAUFKANAL UMFASSEN
CONVERGENT-DIVERGENT FLAP PAIR FOR A VARIABLE-GEOMETRY TURBOJET ENGINE NOZZLE, THE FLAPS OF WHICH EACH COMPRISE A COOLING AIR CIRCULATION DUCT

(30) Priorité: 30.08.2019 FR 1909545
(43) Date de publication de la demande: 01.06.2022
(73) Titulaire: SAFRAN AIRCRAFT ENGINES, 75015 Paris (FR)
(72) Inventeur: LEGLAYE, François, 77550 MOISSY-CRAMAYEL (FR); LACOMBE, Florent, Luc, 77550 MOISSY-CRAMAYEL (FR); MALBOIS, Pierre, André, Gabriel, 77550 MOISSY-CRAMAYEL (FR); OBLAZA, Sylvain, Marcel, 77550 MOISSY-CRAMAYEL (FR); KOHN, Thierry, 77550 MOISSY-CRAMAYEL (FR)
(74) Mandataire: Brevalex
(86) Numéro de dépôt international: PCT/FR2020/051504
(87) Numéro de publication internationale: WO 2021/038171

(56) Documents cités:
- EP-A1- 0 541 346
- CN-A- 110 185 554
- US-A- 4 747 543
- US-A- 5 775 589
- US-A1- 2005 161 527

## Description

### DOMAINE TECHNIQUE

La présente invention se rapporte au domaine des turboréacteurs destinés à la propulsion des aéronefs aptes au vol supersonique, et concerne plus particulièrement un couple volet convergent-volet divergent pour une tuyère de turboréacteur de type convergente-divergente à géométrie variable, une tuyère équipée d'un tel couple volet convergent-volet divergent, et un turboréacteur comprenant une telle tuyère.

### ÉTAT DE LA TECHNIQUE ANTÉRIEURE

Les turboréacteurs destinés au vol supersonique comprennent en général un canal de postcombustion dont la sortie est délimitée par une tuyère axisymétrique de type convergente-divergente, afin de permettre l'accélération du flux d'air sortant du réacteur à des vitesses supérieures à Mach 1.

Pour être efficace aux différentes vitesses auxquelles un aéronef supersonique est susceptible de voler, une telle tuyère présente une géométrie variable, permettant de faire varier la section interne de la tuyère et notamment la position et la forme du col de la tuyère.

À cet effet, une telle tuyère comporte un ensemble de volets internes mobiles destinés à canaliser le flux de gaz sortant du réacteur, cet ensemble comprenant une rangée annulaire de volets convergents suivie d'une rangée annulaire de volets divergents. Les volets divergents sont en général articulés à leurs extrémités amont respectives sur des extrémités aval respectives des volets convergents, et les volets convergents sont eux-mêmes articulés à leurs extrémités amont respectives sur une structure statorique du turboréacteur. L'ensemble de volets internes mobiles est donc constitué d'une rangée annulaire de couples volet convergent-volet divergent.

Une telle tuyère comporte en outre une rangée annulaire de volets externes mobiles entourant l'ensemble de volets internes mobiles.

Compte-tenu de la température élevée des gaz en sortie d'un canal de postcombustion, il est souhaitable d'assurer un refroidissement des volets internes d'une telle tuyère afin de garantir leur tenue mécanique.

À cet effet, de l'air de refroidissement doit être prélevé dans le flux d'air travaillant du turboréacteur, c'est pourquoi il est souhaitable de limiter la quantité d'air nécessaire au refroidissement afin d'optimiser les performances propulsives du réacteur.

Un tel objectif entre toutefois en contradiction avec le souhait d'accroître la richesse des gaz en postcombustion pour améliorer les performances propulsives des turboréacteurs, dès lors qu'un tel accroissement de richesse implique un accroissement de température des gaz, et donc un accroissement du besoin en refroidissement.

Les documents EP 0 541 346 A1 et US 4 747 543 A montrent des tuyères selon l'état de la technique antérieure.

### EXPOSÉ DE L'INVENTION

L'invention a notamment pour but de résoudre au moins partiellement le problème ci-dessus, et en particulier de proposer une solution efficace de refroidissement des volets internes mobiles d'une tuyère convergente-divergente à géométrie variable de turboréacteur, tout en limitant l'impact négatif d'un tel refroidissement sur les performances propulsives du turboréacteur.

L'invention propose à cet effet un couple volet convergent-volet divergent pour tuyère de turboréacteur de type convergente-divergente à géométrie variable, comprenant un volet convergent, et un volet divergent monté pivotant sur le volet convergent autour d'un axe de pivotement, moyennant quoi le couple volet convergent-volet divergent est apte à passer d'une première configuration angulaire extrême, dans laquelle le volet convergent et le volet divergent font entre eux un angle saillant maximal, à une deuxième configuration angulaire extrême, dans laquelle le volet convergent et le volet divergent font entre eux un angle saillant minimal inférieur à l'angle saillant maximal,
dans lequel le volet convergent comporte une paroi interne respective, présentant une surface interne de canalisation de gaz de combustion respective et une surface externe respective, et une paroi externe respective,
dans lequel le volet convergent comporte un conduit de circulation d'air de refroidissement respectif défini entre la surface externe respective de la paroi interne respective du volet convergent, et la paroi externe respective du volet convergent,
dans lequel le volet divergent comporte une paroi interne respective, présentant une surface interne de canalisation de gaz de combustion respective et une surface externe respective, et une paroi externe respective,
dans lequel le volet divergent comporte un conduit de circulation d'air de refroidissement respectif défini entre la surface externe respective de la paroi interne respective du volet divergent, et la paroi externe respective du volet divergent, et raccordé au conduit de circulation d'air de refroidissement respectif du volet convergent.

Le volet divergent comporte une plaque multiperforée pourvue d'orifices de refroidissement par impact, et s'étendant entre la paroi interne respective et la paroi externe respective du volet divergent, moyennant quoi la plaque multiperforée divise le conduit de circulation d'air de refroidissement respectif du volet divergent en :
- une cavité de circulation d'air de refroidissement, définie entre la paroi externe respective du volet divergent et la plaque multiperforée, et raccordée au conduit de circulation d'air de refroidissement respectif du volet convergent, et
- une cavité de refroidissement par impact définie entre la plaque multiperforée et la surface externe respective de la paroi interne respective du volet divergent, pour permettre un refroidissement de la paroi interne respective du volet divergent par impact de jets d'air formés au travers des orifices de refroidissement par impact à partir d'air circulant dans la cavité de circulation d'air de refroidissement.

Le volet divergent comporte deux parois d'extrémités latérales opposées reliant chacune la paroi interne respective du volet divergent à la paroi externe du volet divergent, de sorte que chacune de la cavité de circulation d'air de refroidissement et la cavité de refroidissement par impact est en outre délimitée par les parois d'extrémités latérales respectives du volet divergent.

Chacune des deux parois d'extrémités latérales respectives du volet divergent est pourvue d'orifices de passage d'air au travers desquels la cavité de refroidissement par impact débouche vers l'extérieur.

L'invention permet ainsi un refroidissement efficace de volets internes mobiles, ne requérant qu'une quantité d'air modérée, et ayant donc un impact modéré sur les performances d'un turboréacteur équipé d'une telle tuyère.

L'invention permet ainsi d'améliorer la tenue mécanique de volets internes mobiles et de maîtriser le comportement thermique de ces derniers.

L'invention permet en outre de limiter la température d'une telle tuyère, et donc de limiter le signal infrarouge de celle-ci.

La limitation de la température de la tuyère permet en outre l'utilisation d'un plus large choix de matériaux au sein de celle-ci, notamment des matériaux d'absorption électromagnétique qui sont en général peu tolérants à l'égard des hautes températures.

De préférence, le volet divergent comporte une paroi d'extrémité aval respective ménageant au moins une ouverture par laquelle la cavité de refroidissement par impact débouche vers l'aval.

De préférence, la paroi d'extrémité aval respective du volet divergent relie la paroi externe respective du volet divergent à la plaque multiperforée du volet divergent.

De préférence, le volet divergent comporte une paroi de fermeture, reliant la plaque multiperforée du volet divergent à la paroi interne respective du volet divergent, de manière à fermer une extrémité amont de la cavité de refroidissement par impact du volet divergent.

L'invention concerne également une tuyère de type convergente-divergente à géométrie variable pour turboréacteur, comprenant des couples volet convergent-volet divergent répartis autour d'un axe de la tuyère et dont au moins certains sont des couples volet convergent-volet divergent du type décrit ci-dessus, et un canal de circulation de gaz de combustion délimité au moins par les surfaces internes de canalisation de gaz de combustion respectives des parois internes respectives des volets convergents respectifs et des volets divergents respectifs des couples volet convergent-volet divergent du type décrit ci-dessus.

De préférence, les couples volet convergent-volet divergent du type décrit ci-dessus forment des couples volet convergent-volet divergent suiveurs, la tuyère comprenant en outre des couples volet convergent-volet divergent commandés agencés en alternance circonférentiellement avec les couples volet convergent-volet divergent suiveurs et comprenant des volets divergents respectifs comprenant des parois de canalisation de gaz de combustion respectives présentant des surfaces internes de canalisation de gaz de combustion respectives délimitant le canal de circulation de gaz de combustion.

De préférence, les orifices de passage d'air des parois d'extrémités latérales respectives des volets divergents respectifs des couples volet convergent-volet divergent suiveurs débouchent dans le canal de circulation de gaz de combustion, en regard des parois de canalisation de gaz de combustion respectives des volets divergents respectifs des couples volet convergent-volet divergent commandés.

De préférence, les volets divergents respectifs des couples volet convergent-volet divergent commandés sont des volets à simple peau.

L'invention concerne également un turboréacteur pour aéronef, comprenant un canal de postcombustion entouré d'un plenum de refroidissement séparé du canal de postcombustion par une chemise de protection thermique, et une tuyère du type décrit ci-dessus, dans lequel les cavités de circulation d'air de refroidissement respectives des volets convergents des couples volet convergent-volet divergent du type décrit ci-dessus de la tuyère sont raccordées au plenum de refroidissement entourant le canal de postcombustion.

### BRÈVE DESCRIPTION DES DESSINS

L'invention sera mieux comprise, et d'autres détails, avantages et caractéristiques de celle-ci apparaîtront à la lecture de la description suivante faite à titre d'exemple non limitatif et en référence aux dessins annexés dans lesquels :
- la figure 1 est une demi-vue schématique en section axiale d'un turboréacteur comprenant une tuyère de type convergente-divergente à géométrie variable, agencée en sortie d'un canal de postcombustion ;
- la figure 2 est une demi-vue schématique en section axiale d'un canal de postcombustion et d'une tuyère de type convergente-divergente à géométrie variable d'un type connu ;
- la figure 3 est une vue schématique partielle en perspective d'une rangée annulaire de volets divergents faisant partie de la tuyère de la figure 2 ;
- la figure 4 est une vue schématique partielle en section axiale de la tuyère de type convergente-divergente à géométrie variable du turboréacteur de la figure 1, comprenant des couples volet convergent-volet divergent selon un mode de réalisation préféré de l'invention, dont l'un est visible dans une première configuration ;
- la figure 5A est une vue à plus grande échelle d'une partie de la figure 4 ;
- la figure 5B est une vue semblable à la figure 5A, illustrant le couple volet convergent-volet divergent dans une deuxième configuration ;
- la figure 6 est une vue schématique partielle en perspective d'un couple volet convergent-volet divergent selon un mode de réalisation préféré de l'invention, qui fait partie de la tuyère de type convergente-divergente à géométrie variable de la figure 4 ;
- la figure 7 est une vue schématique partielle en perspective du couple volet convergent-volet divergent de la figure 6, dans un état désassemblé ;
- la figure 8 est une vue schématique partielle de côté d'un couple volet convergent-volet divergent selon un autre mode de réalisation préféré de l'invention ;
- la figure 9 est une vue schématique partielle en section axiale du couple volet convergent-volet divergent de la figure 8 ;
- la figure 10 est une vue schématique partielle de dessus d'une plaque multiperforée d'un volet divergent du couple volet convergent-volet divergent de la figure 8.

Dans l'ensemble de ces figures, des références identiques peuvent désigner des éléments identiques ou analogues. De plus, ces figures ne respectent ni l'échelle ni les proportions des éléments qui y sont représentés.

### EXPOSÉ DÉTAILLÉ DE MODES DE RÉALISATION PRÉFÉRÉS

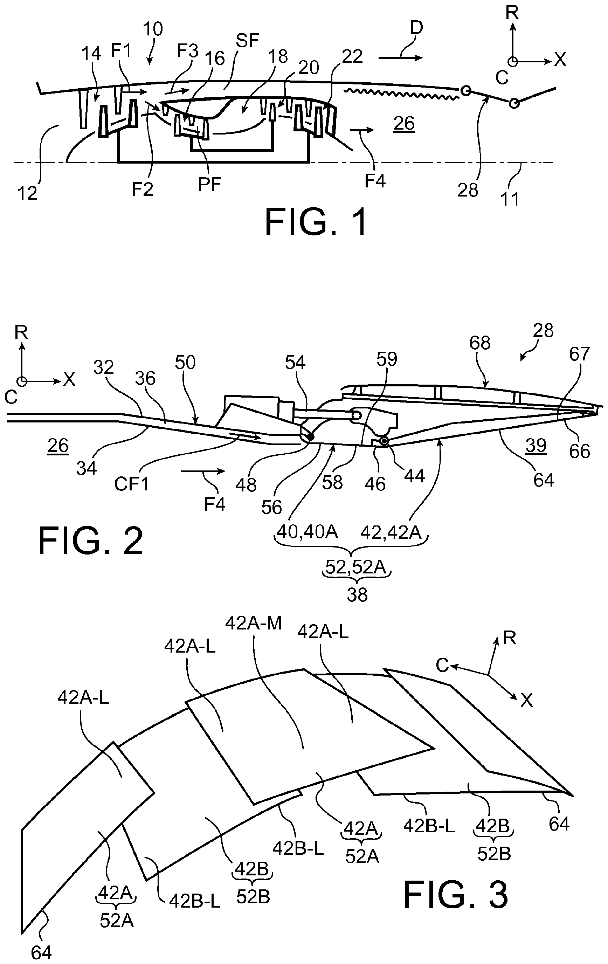

La figure 1 illustre un turboréacteur 10, par exemple à double corps et à double flux, destiné à la propulsion d'un aéronef apte au vol supersonique, et donc destiné en particulier à être installé dans le fuselage d'un tel aéronef.

Dans l'ensemble de cette description, la direction axiale X est la direction de l'axe longitudinal 11 du turboréacteur. Sauf lorsqu'il en est stipulé autrement, la direction radiale R est en tout point une direction orthogonale à l'axe longitudinal 11 et passant par ce dernier, et la direction circonférentielle C est en tout point une direction orthogonale à la direction radiale R et à l'axe longitudinal 11. Sauf lorsqu'il en est stipulé autrement, les termes « interne » et « externe » font respectivement référence à une relative proximité, et un relatif éloignement, d'un élément par rapport à l'axe longitudinal 11. Enfin, les qualificatifs « amont » et « aval » sont définis par référence à une direction générale D de l'écoulement des gaz dans le turboréacteur 10.

Un tel turboréacteur 10 comprend, titre illustratif, de l'amont vers l'aval, une entrée d'air 12, un compresseur basse pression 14, un compresseur haute pression 16, une chambre de combustion 18, une turbine haute pression 20, une turbine basse pression 22, un canal de postcombustion 26, et une tuyère 28 de type convergente-divergente à géométrie variable. Ces organes du turboréacteur sont tous centrés selon l'axe longitudinal 11 du turboréacteur.

De manière bien connue, le compresseur haute pression 16, la chambre de combustion 18, et les turbines haute pression 20 et basse pression 22, définissent une veine primaire PF. Cette dernière est entourée par une veine secondaire SF de la turbomachine qui s'étend de l'amont vers l'aval à partir d'une sortie du compresseur basse pression. Ainsi, en fonctionnement, de l'air F1 qui est entré par l'entrée d'air 12 et qui a été comprimé par le compresseur basse pression 14, se divise ensuite en un flux primaire F2 qui circule dans la veine primaire et en un flux secondaire F3 qui circule dans la veine secondaire 30. Le flux primaire F2 est alors comprimé davantage dans le compresseur haute pression 16, puis mélangé à du carburant et enflammé dans la chambre de combustion 18, avant de subir une détente dans la turbine haute pression 20 puis dans la turbine basse pression 22.

Le flux de gaz F4, constitué par le mélange des gaz de combustion, issus de la veine primaire, et du flux secondaire F3, circule ensuite dans le canal de postcombustion 26, puis s'échappe du turboréacteur 10 au travers de la tuyère 28.

En régime de fonctionnement avec postcombustion, par exemple pour propulser un aéronef à des vitesses supersoniques, du carburant est mélangé au flux de gaz F4 au sein du canal de postcombustion 26, et le mélange ainsi constitué est enflammé au sein de ce canal de postcombustion, afin de générer un surcroît de poussée. La configuration convergente-divergente de la tuyère 28 permet alors d'accélérer le flux de gaz F4 à des vitesses supersoniques.

La figure 2 illustre à plus grande échelle le canal de postcombustion 26, et la tuyère 28, dans une configuration connue de l'art antérieur.

Le canal de postcombustion 26 comporte une enveloppe extérieure 32 de forme de révolution, et une chemise de protection thermique 34 s'étendant coaxialement à l'enveloppe extérieure 32 à l'intérieur de cette dernière. L'enveloppe extérieure 32 et la chemise de protection thermique 34 délimitent entre elles un plenum de refroidissement 36 destiné à la circulation d'un flux d'air de refroidissement CF1 le long de l'enveloppe extérieure 32.

La tuyère 28 comporte un ensemble 38 de volets internes mobiles délimitant extérieurement un canal de circulation de gaz de combustion 39, qui correspond, au sein du turboréacteur, à une partie d'extrémité aval du canal de postcombustion 26. Les volets internes mobiles permettent ainsi de canaliser le flux de gaz F4 en sortie du turboréacteur 10 en fonctionnement.

L'ensemble 38 de volets internes mobiles comprend, en amont, une rangée annulaire de volets convergents 40, suivie, en aval, d'une rangée annulaire de volets divergents 42.

Les volets divergents 42 sont articulés, à leurs extrémités amont 44 respectives, respectivement sur des extrémités aval 46 respectives des volets convergents 40. Les volets convergents 40 sont eux-mêmes articulés à leurs extrémités amont 48 respectives sur une structure statorique 50 du turboréacteur.

L'ensemble 38 de volets internes mobiles est donc constitué d'une rangée annulaire de couples volet convergent-volet divergent 52, les volets de chaque couple étant articulés pour être aptes à passer d'une première configuration angulaire extrême, dans laquelle le volet convergent et le volet divergent font entre eux un angle saillant maximal, à une deuxième configuration angulaire extrême, dans laquelle le volet convergent et le volet divergent font entre eux un angle saillant minimal inférieur à l'angle saillant maximal, et inversement, d'une manière connue en soi.

Par exemple, l'ensemble 38 comporte des couples volet convergent-volet divergent commandés 52A, et des couples volet convergent-volet divergent suiveurs 52B, disposés en alternance dans la direction circonférentielle C. Les couples volet convergent-volet divergent commandés 52A sont constitués de volets convergents commandés 40A et de volets divergents commandés 42A, tandis que les couples volet convergent-volet divergent suiveurs 52B sont constitués de volets convergents suiveurs 40B et de volets divergents suiveurs 42B. La figure 3 montre des volets divergents 42A, 42B respectifs de couples commandés 52A et de couples suiveurs 52B.

Les couples commandés 52A, dont l'un est visible sur la figure 2, sont directement reliés à des organes d'actionnement 54 respectifs de la tuyère, lesquels organes d'actionnement sont montés sur la structure statorique 50 du turboréacteur, de manière à commander directement le déplacement des couples commandés 52A. Les couples suiveurs 52B coopèrent avec les couples commandés 52A adjacents par l'intermédiaire d'organes d'entraînement (non visibles sur les figures) configurés pour communiquer un déplacement des couples commandés 52A aux couples suiveurs 52B.

Les volets convergents 40 comportent chacun une paroi de canalisation de gaz de combustion 56 respective, s'étendant selon une direction longitudinale respective du volet, et présentant, d'un côté radialement interne, une surface interne de canalisation de gaz de combustion 58 respective, et, d'un côté radialement externe, une surface externe 59 respective.

Les volets divergents 42 comportent chacun une paroi de canalisation de gaz de combustion 64 respective, s'étendant selon une direction longitudinale respective du volet, et présentant, d'un côté radialement interne, une surface interne de canalisation de gaz de combustion 66 respective, et, d'un côté radialement externe, une surface externe 67 respective.

Les surfaces internes de canalisation de gaz de combustion 58 et 66 respective des volets convergents 40 et des volets divergents 42 délimitent le canal de circulation de gaz de combustion 39, et permettent donc de canaliser le flux de gaz F4 en sortie du turboréacteur 10.

La tuyère 28 comporte en outre une rangée annulaire de volets externes mobiles 68 entourant l'ensemble 38 de volets internes mobiles (figure 2) et articulés sur la structure statorique 50 du turboréacteur de manière à se déplacer de manière synchronisée avec l'ensemble 38 de volets internes mobiles.

En fonctionnement, l'air de refroidissement provenant du plenum de refroidissement 36 s'échappe librement vers l'aval et vers les côtés après avoir contribué au refroidissement de l'enveloppe extérieure 32, et contribue éventuellement de manière marginale au refroidissement de l'ensemble 38 de volets internes mobiles.

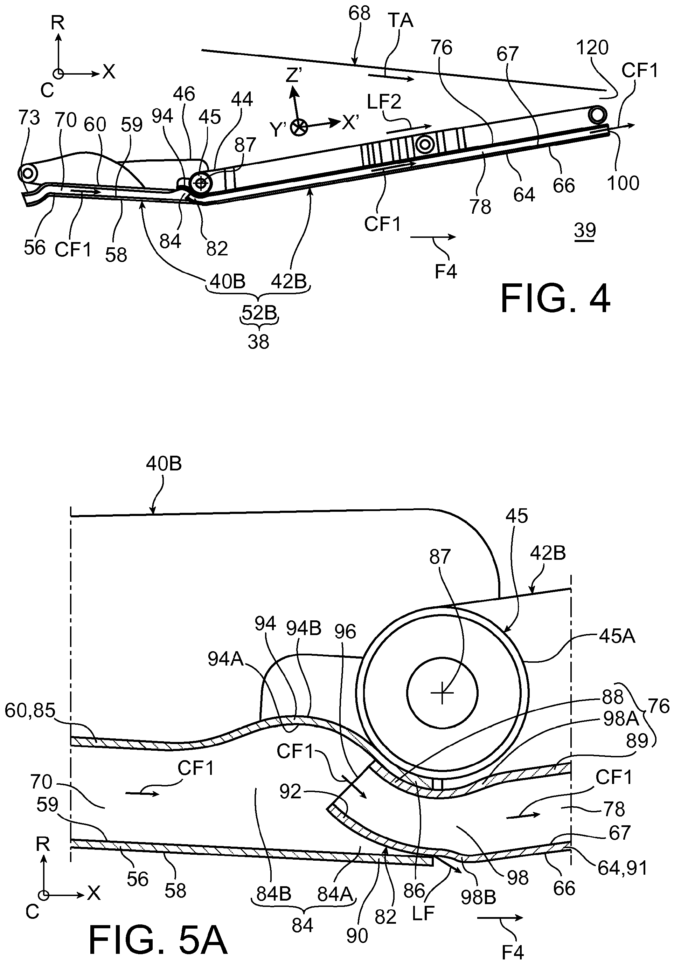

L'invention, dont des modes de réalisation préférés vont maintenant être décrits en référence aux figures 4 à 10, propose une amélioration de la tuyère 28 de type convergente-divergente à géométrie variable. Plus précisément, l'invention permet une amélioration du refroidissement de l'ensemble 38 de volets internes mobiles, comme cela apparaîtra plus clairement dans ce qui suit.

La figure 4 montre plus particulièrement un couple volet convergent-volet divergent suiveur 52B, ainsi que, disposé radialement en regard de celui-ci, un volet externe mobile 68, illustré très schématiquement. Les explications données ci-après en référence aux figures 4 à 10 sont valables pour chacun des couples volet convergent-volet divergent suiveur 52B de la tuyère 28.

Le couple volet convergent-volet divergent suiveur 52B, également visible sur les figures 5A à 7, comprend un volet convergent 40B et un volet divergent 42B.

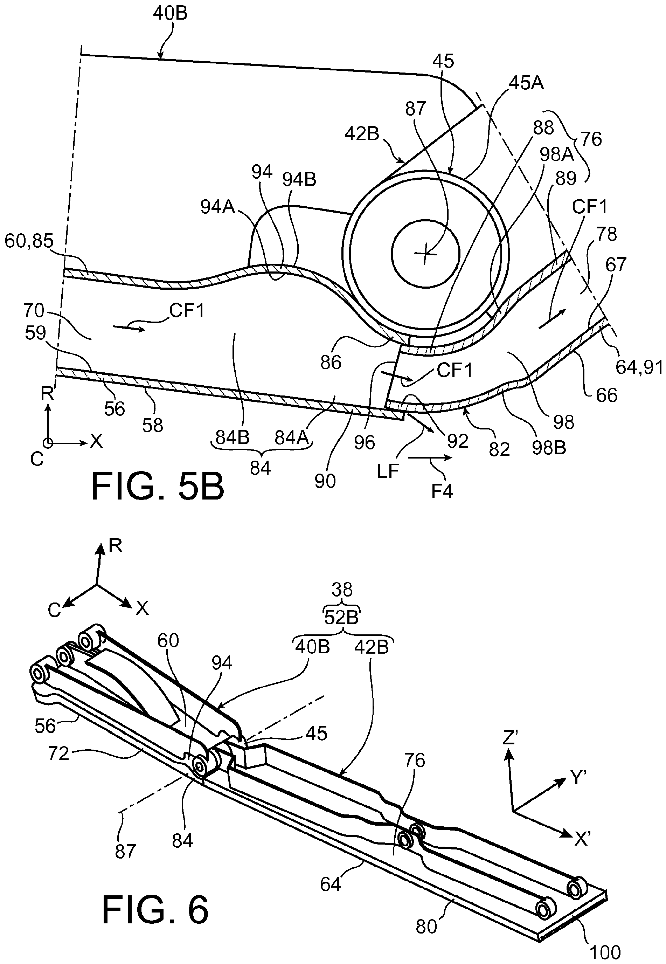

Comme expliqué ci-dessus, le volet divergent 42B est articulé à son extrémité amont 44 sur l'extrémité aval 46 du volet convergent 40B, par exemple au moyen d'une articulation par charnière 45, moyennant quoi le couple volet convergent-volet divergent suiveur 52B est apte à passer d'une première configuration angulaire extrême (figure 5A), dans laquelle le volet convergent 40B et le volet divergent 42B font entre eux un angle saillant maximal, à une deuxième configuration angulaire extrême (figure 5B), dans laquelle le volet convergent 40B et le volet divergent 42B font entre eux un angle saillant minimal inférieur à l'angle saillant maximal

De manière analogue à ce qui est décrit ci-dessus, le volet convergent 40B comporte une paroi de canalisation de gaz de combustion respective, dénommée paroi interne 56 dans ce qui suit, s'étendant selon une direction longitudinale respective du volet, et présentant, d'un côté radialement interne, une surface interne de canalisation de gaz de combustion 58 respective, et, d'un côté radialement externe, une surface externe 59 respective.

À la différence de ce qui précède, le volet convergent 40B comporte une paroi externe 60 respective, s'étendant en vis-à-vis de la surface externe 59 de la paroi interne 56 de ce volet (figures 4, 5A-5B et 7), par exemple parallèlement à la paroi interne 56.

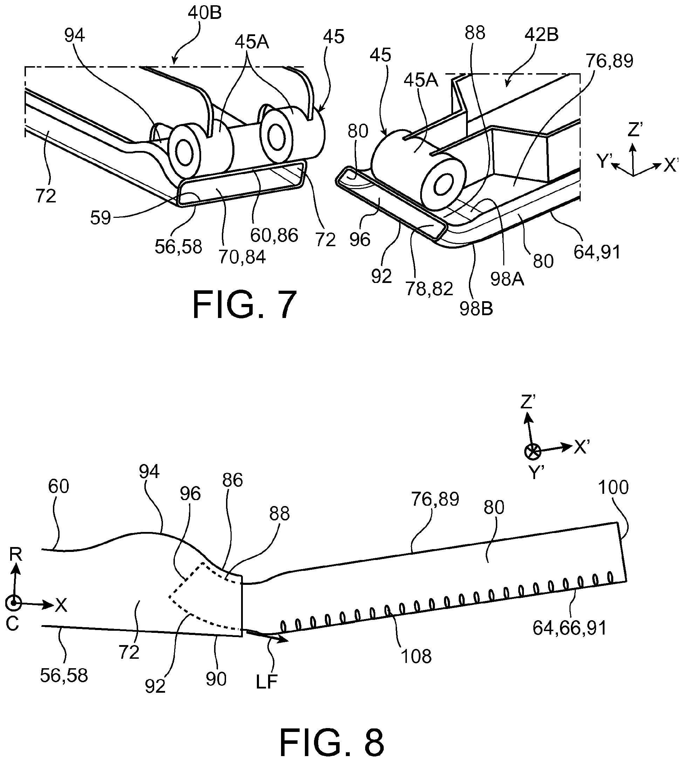

Le volet convergent 40B comporte en outre deux parois d'extrémités latérales 72 opposées respectives reliant chacune la paroi interne 56 de ce volet à la paroi externe 60 de ce volet (figures 6 et 7).

Ainsi, le volet convergent 40B comporte un conduit de circulation d'air de refroidissement 70 respectif (figures 4, 5A-5B, 7) défini entre la paroi interne 56 et la paroi externe 60 du volet 40B, et entre les deux parois d'extrémités latérales 72 de ce volet.

Le conduit de circulation d'air de refroidissement 70 du volet convergent 40B comporte, à son extrémité amont, un embout 73 (figure 4) configuré pour être raccordé au plenum de refroidissement 36 entourant le canal de postcombustion 26 (figure 2), de sorte que le conduit de circulation d'air de refroidissement 70 reçoive une partie du flux d'air de refroidissement CF1, en fonctionnement.

De plus, le conduit de circulation d'air de refroidissement 70 est donc délimité notamment par la surface externe 59 de la paroi interne 56 du volet (figures 4, 5A-5B, 7). Cette dernière paroi est ainsi refroidie par de l'air circulant dans le conduit de circulation d'air de refroidissement 70, en fonctionnement.

De manière analogue à ce qui est décrit ci-dessus, le volet divergent 42B comporte une paroi de canalisation de gaz de combustion respective, dénommée paroi interne 64 dans ce qui suit, s'étendant selon une direction longitudinale respective du volet, et présentant, d'un côté radialement interne, une surface interne de canalisation de gaz de combustion 66 respective, et, d'un côté radialement externe, une surface externe 67 respective.

Pour faciliter la présente description, un repère orthonormé X', Y', Z' est défini de sorte que la direction X' corresponde à la direction longitudinale du volet divergent 42B, et donc en particulier de la paroi interne 64 de celui-ci, et que la direction Y' corresponde à une direction transversale du volet divergent, et la direction Z' corresponde à la direction de l'épaisseur du volet divergent.

À la différence de ce qui précède, le volet divergent 42B comporte en outre une paroi externe 76 respective s'étendant en vis-à-vis de la surface externe 67 de la paroi interne 64 de ce volet, par exemple parallèlement à la paroi interne 64, de sorte que ces deux parois 64 et 76 définissent entre elles un conduit de circulation d'air de refroidissement 78 respectif du volet divergent 42B (figures 4, 5A-5B, 7).

Le volet divergent 42B comporte en outre deux parois d'extrémités latérales 80 respectives reliant chacune la paroi interne 64 à la paroi externe 76 du volet divergent (figures 6, 7), de sorte que les deux parois d'extrémités latérales 80 ferment latéralement (et délimitent donc entre elles) le conduit de circulation d'air de refroidissement 78 du volet divergent 42B.

Le conduit de circulation d'air de refroidissement 78 du volet divergent 42B est raccordé au conduit de circulation d'air de refroidissement 70 du volet convergent 40B (figures 5A, 5B). Le conduit de circulation d'air de refroidissement 78 du volet divergent 42B reçoit ainsi le flux d'air de refroidissement issu du conduit de circulation d'air de refroidissement 70 du volet convergent 40B, ou au moins une partie majoritaire de celui-ci, en fonctionnement.

Par exemple, le conduit de circulation d'air de refroidissement 78 du volet divergent 42B comporte à cet effet une portion de raccordement 82 respective coopérant par emmanchement avec une portion d'extrémité 84 respective du conduit de circulation d'air de refroidissement 70 du volet convergent 40B (figures 4 et 5A-5B).

En particulier, la paroi externe 60 du volet convergent 40B comporte une portion principale 85 respective, par exemple de forme plane, et une portion d'extrémité 86 respective qui délimite une partie aval 84A de la portion d'extrémité 84 du conduit de circulation d'air de refroidissement 70 du volet convergent 40B (figures 5A et 5B).

La portion d'extrémité 86 est en forme de portion de cylindre de révolution d'axe coïncidant avec un axe de pivotement 87 autour duquel le volet divergent 42B pivote par rapport au volet convergent 40B lorsque le couple volet convergent-volet divergent suiveur 52B passe de l'une à l'autre des première et deuxième configurations angulaires extrêmes. Autrement dit, l'axe de pivotement 87 constitue l'axe de courbure de la portion d'extrémité 86.

Dans l'exemple illustré, l'articulation par charnière 45 présente une surface externe 45A de forme cylindrique de révolution centrée sur l'axe de pivotement 87 et en contact avec la portion d'extrémité 86 de la paroi externe 60 du volet convergent 40B (figures 5A-5B et 7).

La paroi externe 76 du volet divergent 42B comporte une portion principale 89 respective, par exemple de forme plane, et une portion d'extrémité 88 respective, qui délimite la portion de raccordement 82 du conduit de circulation d'air de refroidissement 78 du volet divergent, et qui est de forme complémentaire à la portion d'extrémité 86 de la paroi externe 60 du volet convergent 40B (figures 5A et 5B). La portion d'extrémité 88 de la paroi externe 76 du volet divergent 42B présente ainsi le même axe de courbure que la portion d'extrémité 86 de la paroi externe 60 du volet convergent 40B.

La forme incurvée des portions d'extrémité 86 et 88 permet un mouvement de pivotement relatif entre le volet convergent 40B et le volet divergent 42B pour le passage de l'une à l'autre des première et deuxième configurations du couple volet convergent-volet divergent suiveur 52B.

La portion d'extrémité 88 de la paroi externe 76 du volet divergent 42B est en contact surfacique avec la portion d'extrémité 86 de la paroi externe 60 du volet convergent 40B, de telle sorte que la portion d'extrémité 88 de la paroi externe 76 du volet divergent glisse le long de la portion d'extrémité 86 de la paroi externe 60 du volet convergent, lorsque le couple volet convergent-volet divergent suiveur 52B passe de l'une à l'autre des première et deuxième configurations angulaires extrêmes (figures 5A et 5B respectivement).

En variante, ces deux parois peuvent être légèrement espacées l'une de l'autre, moyennant quoi la portion d'extrémité 88 de la paroi externe 76 du volet divergent 42B se déplace en regard de la portion d'extrémité 86 de la paroi externe 60 du volet convergent 40B lors du passage de l'une à l'autre des première et deuxième configurations.

Dans le mode de réalisation préférentiel illustré, la portion de raccordement 82 du conduit de circulation d'air de refroidissement 78 du volet divergent 42B est engagée dans la portion d'extrémité 84 du conduit de circulation d'air de refroidissement 70 du volet convergent 40B. Autrement dit, la portion d'extrémité 84 du conduit de circulation d'air de refroidissement 70 du volet convergent 40B entoure au moins une partie de la portion de raccordement 82 du conduit de circulation d'air de refroidissement 78 du volet divergent 42B.

La paroi interne 56 du volet convergent 40B présente une forme plane y compris dans une portion d'extrémité aval 90 de cette paroi, laquelle portion d'extrémité aval délimite la partie aval 84A de la portion d'extrémité 84 du conduit de circulation d'air de refroidissement 70 du volet convergent 40B.

La paroi interne 64 du volet divergent 42B comporte une portion principale 91 respective, par exemple de forme plane, et une portion d'extrémité 92 respective qui délimite la portion de raccordement 82 du conduit de circulation d'air de refroidissement 78 du volet divergent 42B.

Vue en section axiale, la portion d'extrémité 92 est de forme homothétique à la forme de la portion d'extrémité 88 de la paroi externe 76 du volet divergent, par une homothétie dont le centre est situé sur l'axe de pivotement 87. La portion d'extrémité 92 présente ainsi également un axe de courbure confondu avec l'axe de pivotement 87. Par « section axiale », il faut comprendre une section selon un plan comprenant l'axe longitudinal 11 du turboréacteur, c'est-à-dire selon un plan orthogonal à la paroi interne 64 du volet divergent 42B et à l'axe de pivotement 87.

La portion d'extrémité 92 de la paroi interne 64 du volet divergent 42B peut ainsi se déplacer en regard de la portion d'extrémité aval 90 de la paroi interne 56 du volet convergent 40B lorsque le couple volet convergent-volet divergent suiveur 52B passe de l'une à l'autre des première et deuxième configurations angulaires extrêmes.

La portion de raccordement 82 du conduit de circulation d'air de refroidissement 78 du volet divergent 42B et la portion d'extrémité 84 du conduit de circulation d'air de refroidissement 70 du volet convergent 40B sont configurées pour que d'éventuelles fuites d'air LF entre le conduit de circulation d'air de refroidissement 70 du volet convergent 40B et le conduit de circulation d'air de refroidissement 78 du volet divergent 42B soient localisées entre la portion d'extrémité 92 de la paroi interne 64 du volet divergent 42B et la portion d'extrémité aval 90 de la paroi interne 56 du volet convergent 40B.

Dans l'exemple illustré, cette particularité est obtenue, d'une part, grâce au contact entre la portion d'extrémité 88 de la paroi externe 76 du volet divergent 42B et la portion d'extrémité 86 de la paroi externe 60 du volet convergent 40B, qui empêche les fuites d'air entre ces deux parois, et d'autre part, au moyen d'un léger jeu entre la portion d'extrémité 92 de la paroi interne 64 du volet divergent 42B et la portion d'extrémité aval 90 de la paroi interne 56 du volet convergent 40B.

Ainsi, les éventuelles fuites d'air LF entre le conduit de circulation d'air de refroidissement 70 du volet convergent 40B et le conduit de circulation d'air de refroidissement 78 du volet divergent 42B se font dans le même sens que l'écoulement du flux de gaz F4 provenant du canal de postcombustion 26. Les pertes de charges induites par les éventuelles fuites d'air LF sont ainsi minimisées. De plus, ces éventuelles fuites d'air LF peuvent ainsi former un film de refroidissement le long de la paroi surface interne de canalisation de gaz de combustion 66 du volet divergent 42B, et contribuer ainsi au refroidissement du volet divergent 42B.

De plus, la paroi externe 60 du volet convergent 40B comporte un renflement 94 adjacent à la portion d'extrémité 86 de cette paroi externe 60, le renflement étant conformé de manière à présenter une surface interne 94A de forme concave et une surface externe 94B de forme convexe. Par « surface interne », il faut comprendre une surface délimitant le conduit de circulation d'air de refroidissement 70 du volet convergent 40B. Par « surface externe », il faut comprendre une surface extérieure audit conduit. Le renflement 94 délimite une partie amont 84B de la portion d'extrémité 84 du conduit de circulation d'air de refroidissement 70 du volet convergent 40B. Le renflement 94 et la portion d'extrémité 86 de la paroi externe 60 du volet convergent présentent conjointement une forme de vague.

Le renflement 94 permet d'orienter le flux d'air de refroidissement CF1 sensiblement orthogonalement à une section d'entrée 96 de la portion de raccordement 82 du conduit de circulation d'air de refroidissement 78 du volet divergent 42B (figures 5A et 5B).

Dans le mode de réalisation préférentiel décrit, la portion de raccordement 82 du conduit de circulation d'air de refroidissement 78 du volet divergent 42B comporte un col sonique 98. La portion de raccordement 82 permet ainsi d'accélérer au-delà de Mach 1 l'air de refroidissement provenant du conduit de circulation d'air de refroidissement 70 du volet divergent 40B, au moins pour un point critique de la plage de régimes de fonctionnement avec postcombustion du turboréacteur.

Plus précisément, la paroi externe 76 du volet divergent 42B comporte une portion de col sonique 98A reliant la portion principale 89 de cette paroi à la portion d'extrémité 88 de cette paroi. La paroi interne 64 du volet divergent 42B comporte une portion de col sonique 98B reliant la portion principale 91 à la portion d'extrémité 92 de cette paroi. Les portions de col sonique 98A et 98B divergent l'une de l'autre en direction de l'aval et sont incurvées de manière aérodynamique. En particulier, vue depuis l'intérieur de la portion de raccordement 82 du conduit 78, chaque portion de col sonique 98A, 98B comporte une partie amont respective convexe, et une partie aval respective concave, séparées l'une de l'autre par une ligne d'inflexion.

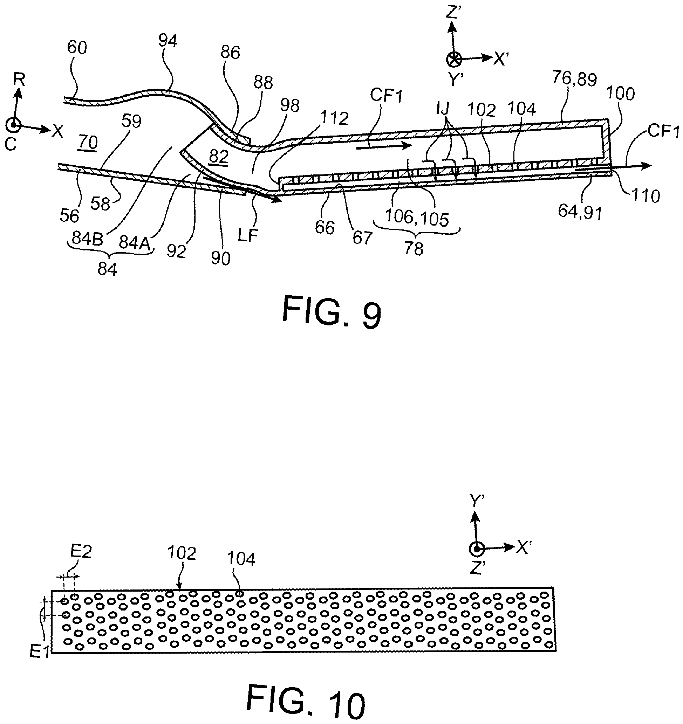

Par ailleurs, le volet divergent 42B comporte une paroi d'extrémité aval 100 respective (figures 4, 6) agencée à une extrémité aval du conduit de circulation d'air de refroidissement 78 du volet divergent 42B, et ménageant au moins une ouverture 110 par laquelle ce conduit débouche vers l'aval (visible uniquement sur la figure 9, pour des raisons de clarté). Il faut comprendre par-là qu'au moins une telle ouverture est formée dans la paroi d'extrémité aval 100 et/ou qu'au moins une telle ouverture est adjacente à la paroi d'extrémité aval 100, c'est-à-dire ménagée entre un bord de la paroi d'extrémité aval 100 et l'une parmi la paroi interne 64, la paroi externe 76, et les parois d'extrémités latérales 80. La paroi d'extrémité aval 100 relie ainsi entre elles au moins certaines parmi la paroi interne 64, la paroi externe 76, et les parois d'extrémités latérales 80.

Une telle ouverture permet l'échappement du flux d'air de refroidissement CF1 hors du conduit de circulation d'air de refroidissement 78 du volet divergent 42B vers l'aval, en fonctionnement.

Le conduit de circulation d'air de refroidissement 78 du volet divergent 42B s'étend avantageusement jusqu'à l'extrémité aval de la paroi interne 64 de ce volet, de sorte que l'intégralité de cette paroi est refroidie par le flux d'air de refroidissement CF1 en fonctionnement.

Dans un autre mode de réalisation préféré de l'invention illustré par les figures 8 à 10, le volet divergent 42B comporte en outre une plaque multiperforée 102, pourvue d'orifices de refroidissement par impact 104, et s'étendant dans le conduit de circulation d'air de refroidissement 78 de ce volet, c'est-à-dire entre la paroi interne 64 et la paroi externe 76 de ce volet.

La plaque multiperforée 102 divise le conduit de circulation d'air de refroidissement 78 en une cavité de circulation d'air de refroidissement 105 définie entre la paroi externe 76 et la plaque multiperforée 102 et communiquant directement avec le conduit de circulation d'air de refroidissement 70 du volet convergent 40B correspondant, et une cavité de refroidissement par impact 106 définie entre la plaque multiperforée 102 et la surface externe 67 de la paroi interne 64 de ce volet, pour permettre un refroidissement de cette paroi 64 par impact de jets d'air formés au travers des orifices de refroidissement par impact 104 à partir d'air issu de la cavité de circulation d'air de refroidissement 105 (figure 9).

À cet effet, la plaque multiperforée 102 s'étend de préférence à faible distance de la surface externe 67 de la paroi interne 64, par exemple à une distance de 1 mm environ de cette dernière.

Le flux d'air de refroidissement CF1 circulant dans la cavité de circulation d'air de refroidissement 105 pénètre ainsi dans la cavité de refroidissement par impact 106 en formant des jets d'impact IJ au travers des orifices de refroidissement par impact 104 de la plaque multiperforée 102, en fonctionnement. Les jets d'impacts IJ permettent un refroidissement optimal de la paroi interne 64.

Par ailleurs, chacune des parois d'extrémités latérales 80 est avantageusement pourvue d'orifices de passage d'air 108 (figure 8) au travers desquels la cavité de refroidissement par impact 106 débouche dans le canal de circulation de gaz de combustion 39. Les orifices 108 peuvent présenter toute forme appropriée, par exemple circulaire, oblongue, elliptique, ou encore être en forme de fentes.

Ainsi, l'air issu des jets d'impact IJ peut circuler dans une direction latérale au sein de la cavité de refroidissement par impact 106, jusqu'à s'échapper au travers des orifices de passage d'air 108, en fonctionnement.

Ce mode de fonctionnement permet d'éviter autant que possible que l'air issu d'un jet d'impact IJ formé au travers d'un orifice 104 déterminé, et ayant été réchauffé par la paroi interne 64 en refroidissant cette dernière, ne circule vers l'aval et réchauffe ainsi d'autres jets d'impact formés au travers d'autres orifices 104 agencés en aval de l'orifice 104 déterminé précité, diminuant ainsi la capacité de refroidissement de ces autres jets d'impact.

De plus, la circulation latérale de l'air au sein de la cavité de refroidissement par impact 106 permet de réduire l'interaction par cisaillement mutuel entre jets d'impact adjacents.

En outre, les orifices de passage d'air 108 débouchent en regard des parois de canalisation de gaz de combustion 64 des volets divergents 42A respectifs des deux couples volet convergent-volet divergent commandés 52A adjacents au couple volet convergent-volet divergent suiveur 52B considéré.

Ces volets divergents 42A adjacents sont moins exposés à la chaleur des gaz de combustion que les volets divergents 42B suiveurs. Par exemple, sur la figure 3, il est clair que chaque volet divergent suiveur 42B présente des parties d'extrémité latérale 42B-L s'étendant respectivement devant des parties d'extrémités latérales 42A-L respectives des deux volets divergents commandés 42A adjacents, et masquent ainsi ces parties d'extrémités latérales respectives des volets divergents commandés 42A vis-à-vis des gaz de combustion. Ainsi, seule une partie médiane 42A-M respective de chaque volet divergent commandé 42A est exposée directement aux gaz de combustion.

L'air issu des orifices de passage d'air 108 peut donc être suffisant pour refroidir les parties médianes 42A-M respectives des volets divergent commandés 42A, auquel cas les volets divergent commandés 42A sont avantageusement des volets à simple peau, c'est-à-dire dépourvus de conduit de circulation d'air de refroidissement.

Par ailleurs, les orifices de refroidissement par impact 104 sont avantageusement agencés en quinconce (figure 10). Le pas longitudinal E1 entre deux rangées d'orifices et le pas latéral E2 entre orifices au sein de chaque rangée sont par exemple égaux chacun à 1 cm, tandis que le diamètre de chaque orifice 104 est par exemple égal à 1 mm.

De plus, l'ouverture 110 ménagée par la paroi d'extrémité aval 100 du volet divergent 42B est avantageusement une ouverture au travers de laquelle la cavité de refroidissement par impact 106 débouche vers l'extérieur du conduit de circulation d'air de refroidissement 78 (figure 9).

À cet effet, l'ouverture 110 est formée entre la plaque multiperforée 102 et la paroi interne 64 du volet divergent 42B. Par exemple, la paroi d'extrémité aval 100 s'étend jusqu'à la plaque multiperforée 102, et pas au-delà de cette dernière en direction de la paroi interne 64.

En variante, la paroi d'extrémité aval 100 peut s'étendre jusqu'à la paroi interne 64 et comporter une ou plusieurs ouvertures 110 au travers desquelles la cavité de refroidissement par impact 106 débouche vers l'extérieur du conduit de circulation d'air de refroidissement 78.

Ainsi, une partie de l'air issu des jets d'impact IJ peut s'échapper de la cavité de refroidissement par impact 106 vers l'aval au travers de l'ouverture 110 ou de chaque ouverture 110, en fonctionnement.

Le volet divergent 42B comporte en outre une paroi de fermeture 112 reliant la plaque multiperforée 102 à la paroi interne 64 de manière à fermer une extrémité amont de la cavité de refroidissement par impact 106 et séparer ainsi cette dernière d'une partie d'extrémité amont de la cavité de circulation d'air de refroidissement 105 (figure 9).

Une telle paroi de fermeture 112 permet notamment d'éviter que de l'air ne pénètre dans la cavité de refroidissement par impact 106 sans passer au travers d'orifices 104 de la plaque multiperforée, et d'éviter une recirculation de l'air après son passage au travers des orifices 104 de la plaque multiperforée 102.

Par ailleurs, la tuyère 28 comporte avantageusement un espace de sortie d'air 120 ménagé entre une extrémité aval du volet divergent 42B et une extrémité aval du volet externe mobile 68 agencé en regard du volet divergent 42B (figure 4). Un tel espace de sortie d'air 120 permet l'échappement d'air provenant d'éventuelles fuites LF2 entre volets internes mobiles circonférentiellement adjacents, et/ou d'air TA provenant d'un plenum extérieur, couramment dénommé « tunnel », entourant le turboréacteur au sein du fuselage d'un aéronef.

En fonctionnement, le flux de gaz F4, constitué par le mélange des gaz de combustion issus de la veine primaire, et du flux secondaire F3, circule dans le canal de postcombustion 26, puis s'échappe du turboréacteur 10 au travers de la tuyère 28, comme expliqué ci-dessus en référence à la figure 2.

Le flux d'air de refroidissement CF1 circule le long de l'enveloppe extérieure 32 au sein du plenum de refroidissement 36 (figure 2) puis pénètre dans le conduit de circulation d'air de refroidissement 70 du volet convergent 40B par l'embout 73 de ce dernier (figure 4).

Le flux d'air de refroidissement CF1 circule dans le conduit de circulation d'air de refroidissement 70 jusqu'à la portion d'extrémité 84 de celui-ci, refroidissant ainsi le volet convergent 40B, en particulier la paroi interne 56 de ce volet.

Puis le flux d'air de refroidissement CF1 pénètre dans le conduit de circulation d'air de refroidissement 78 du volet divergent 42B correspondant par la portion de raccordement 82 de ce dernier puis circule dans ce conduit, avant de s'en échapper au travers de l'ouverture 110 ménagée par la paroi d'extrémité aval 100 du volet divergent 42B.

Dans les modes de réalisation décrits, le flux d'air de refroidissement CF1 est accéléré jusqu'à une vitesse supersonique en passant au travers du col sonique 98.

Dans le cas particulier du deuxième mode de réalisation préféré de l'invention, le flux d'air de refroidissement CF1 circule dans la cavité de circulation d'air de refroidissement 105 du conduit de circulation d'air de refroidissement 78, et passe au travers des orifices de refroidissement par impact 104 de la plaque multiperforée 102 en formant les jets d'impact IJ. Ces derniers permettent un refroidissement optimal de la paroi interne 64 du volet divergent 42B.

Une majeure partie de l'air issu des jets d'impact IJ circule en direction des deux parois d'extrémités latérales 80 du volet, puis s'échappe du conduit 78 en passant au travers des orifices de passage d'air 108 formés dans ces parois 80. Une autre partie de l'air issu des jets d'impact IJ circule en direction de l'aval puis s'échappe du conduit 78 en passant au travers de l'ouverture 110 ménagée par la paroi d'extrémité aval 100 du volet divergent 42B.

De manière générale, l'invention est applicable à tout type de turboréacteur comprenant une tuyère de type convergente-divergente à géométrie variable, et en particulier comprenant en outre un canal de postcombustion en amont de ladite tuyère.

## Revendications

1. Couple volet convergent-volet divergent (52B) pour tuyère (28) de turboréacteur de type convergente-divergente à géométrie variable, comprenant un volet convergent (40B), et un volet divergent (42B) monté pivotant sur le volet convergent autour d'un axe de pivotement (87), moyennant quoi le couple volet convergent-volet divergent est apte à passer d'une première configuration angulaire extrême, dans laquelle le volet convergent et le volet divergent font entre eux un angle saillant maximal, à une deuxième configuration angulaire extrême, dans laquelle le volet convergent et le volet divergent font entre eux un angle saillant minimal inférieur à l'angle saillant maximal,
dans lequel le volet convergent comporte une paroi interne (56) respective, présentant une surface interne de canalisation de gaz de combustion (58) respective et une surface externe (59) respective, et une paroi externe (60) respective,
dans lequel le volet convergent comporte un conduit de circulation d'air de refroidissement (70) respectif défini entre la surface externe (59) respective de la paroi interne respective du volet convergent, et la paroi externe (60) respective du volet convergent,
dans lequel le volet divergent comporte une paroi interne (64) respective, présentant une surface interne de canalisation de gaz de combustion (66) respective et une surface externe (67) respective, et une paroi externe (76) respective,
dans lequel le volet divergent comporte un conduit de circulation d'air de refroidissement (78) respectif défini entre la surface externe (67) respective de la paroi interne respective du volet divergent, et la paroi externe (76) respective du volet divergent, et raccordé au conduit de circulation d'air de refroidissement (70) respectif du volet convergent,
dans lequel le volet divergent (42B) comporte en outre une plaque multiperforée (102) pourvue d'orifices de refroidissement par impact (104), et s'étendant entre la paroi interne (64) respective et la paroi externe (76) respective du volet divergent, moyennant quoi la plaque multiperforée divise le conduit de circulation d'air de refroidissement (78) respectif du volet divergent en :
- une cavité de circulation d'air de refroidissement (105), définie entre la paroi externe (76) respective du volet divergent et la plaque multiperforée (102), et raccordée au conduit de circulation d'air de refroidissement (70) respectif du volet convergent, et
- une cavité de refroidissement par impact (106) définie entre la plaque multiperforée (102) et la surface externe (67) respective de la paroi interne respective du volet divergent, pour permettre un refroidissement de la paroi interne (64) respective du volet divergent par impact de jets d'air (IJ) formés au travers des orifices de refroidissement par impact (104) à partir d'air (CF) circulant dans la cavité de circulation d'air de refroidissement,
dans lequel le volet divergent (42B) comporte deux parois d'extrémités latérales (80) respectives opposées reliant chacune la paroi interne (64) respective du volet divergent à la paroi externe (76) respective du volet divergent, de sorte que chacune de la cavité de circulation d'air de refroidissement (105) et la cavité de refroidissement par impact (106) est en outre délimitée par les deux parois d'extrémités latérales (80) respectives du volet divergent,
**caractérisé en ce que** chacune des deux parois d'extrémités latérales (80) respectives du volet divergent est pourvue d'orifices de passage d'air (108) au travers desquels la cavité de refroidissement par impact (106) débouche vers l'extérieur.

2. Couple volet convergent-volet divergent selon la revendication 1, dans lequel le volet divergent comporte une paroi d'extrémité aval (100) respective ménageant au moins une ouverture (110) par laquelle la cavité de refroidissement par impact (106) débouche vers l'aval.

3. Couple volet convergent-volet divergent selon la revendication 2, dans lequel la paroi d'extrémité aval (100) respective du volet divergent relie la paroi externe (76) respective du volet divergent à la plaque multiperforée (102) du volet divergent.

4. Couple volet convergent-volet divergent selon l'une quelconque des revendications 1 à 3, dans lequel le volet divergent (42B) comporte une paroi de fermeture (112), reliant la plaque multiperforée (102) du volet divergent à la paroi interne (64) respective du volet divergent, de manière à fermer une extrémité amont de la cavité de refroidissement par impact (106) du volet divergent.

5. Tuyère (28) de type convergente-divergente à géométrie variable pour turboréacteur, comprenant des couples volet convergent-volet divergent répartis autour d'un axe (11) de la tuyère et dont au moins certains sont des couples volet convergent-volet divergent selon l'une quelconque des revendications 1 à 4, et un canal de circulation de gaz de combustion (39) délimité au moins par les surfaces internes de canalisation de gaz de combustion (58, 66) respectives des parois internes respectives des volets convergents (40B) respectifs et des volets divergents (42B) respectifs des couples volet convergent-volet divergent selon l'une quelconque des revendications 1 à 4.

6. Tuyère selon la revendication 5, dans laquelle les couples volet convergent-volet divergent selon l'une quelconque des revendications 1 à 4 forment des couples volet convergent-volet divergent suiveurs (52B), la tuyère comprenant en outre des couples volet convergent-volet divergent commandés (52A) agencés en alternance circonférentiellement avec les couples volet convergent-volet divergent suiveurs (52B) et comprenant des volets divergents (42A) respectifs comprenant des parois de canalisation de gaz de combustion (64) respectives présentant des surfaces internes de canalisation de gaz de combustion (66) respectives délimitant le canal de circulation de gaz de combustion (39).

7. Tuyère selon la revendication 6, dans laquelle les orifices de passage d'air (108) des parois d'extrémités latérales (80) des volets divergents (42B) respectifs des couples volet convergent-volet divergent suiveurs (52B) débouchent dans le canal de circulation de gaz de combustion (39), en regard des parois de canalisation de gaz de combustion (64) respectives des volets divergents (42A) respectifs des couples volet convergent-volet divergent commandés (52A).

8. Tuyère selon la revendication 7, dans laquelle les volets divergents (42A) respectifs des couples volet convergent-volet divergent commandés (52A) sont des volets à simple peau.

9. Turboréacteur pour aéronef, comprenant un canal de postcombustion (26) entouré d'un plenum de refroidissement (36) séparé du canal de postcombustion (26) par une chemise de protection thermique (34), et une tuyère (28) selon l'une quelconque des revendications 5 à 8,
dans lequel les conduits de circulation d'air de refroidissement (70) respectifs des volets convergents (40B) des couples volet convergent-volet divergent (52B) selon l'une quelconque des revendications 1 à 4 de la tuyère sont raccordées au plenum de refroidissement (36) entourant le canal de postcombustion (26).

## Patentansprüche

1. Konvergent-divergentes Klappenpaar (52B) für eine Triebwerksdüse (28) in der Art konvergent-divergent mit variabler Geometrie, umfassend eine konvergente Klappe (40B), und eine divergente Klappe (42B), die um eine Schwenkachse (87) schwenkbar auf der konvergenten Klappe montiert ist, anhand derer das konvergent-divergente Klappenpaar imstande ist, von einer ersten extremen Winkelkonfiguration, in der die konvergente Klappe und die divergente Klappe einen maximalen vorspringenden Winkel zueinander einschlagen, in eine zweite extreme Winkelkonfiguration überzugehen, in der die konvergente Klappe und die divergente Klappe einen minimalen vorspringenden Winkel zueinander einschlagen, der kleiner als der maximale vorspringende Winkel ist,
wobei die konvergente Klappe eine jeweilige Innenwand (56) beinhaltet, die eine jeweilige Innenoberfläche einer Verbrennungsgasleitung (58) und eine jeweilige Außenoberfläche (59), und eine jeweilige Außenwand (60) aufweist,
wobei die konvergente Klappe einen jeweiligen Kühlluftumlaufkanal (70) beinhaltet, der zwischen der jeweiligen Außenoberfläche (59) der jeweiligen Innenwand der konvergenten Klappe und der jeweiligen Außenwand (60) der konvergenten Klappe definiert ist,
wobei die divergente Klappe eine jeweilige Innenwand (64) beinhaltet, die eine jeweilige Innenoberfläche einer Verbrennungsgasleitung (66) und eine jeweilige Außenoberfläche (67) und eine jeweilige Außenwand (76) aufweist,
wobei die divergente Klappe einen jeweiligen Kühlluftumlaufkanal (78) beinhaltet, der zwischen der jeweiligen Außenoberfläche (67) der jeweiligen Innenwand der divergenten Klappe und der jeweiligen Außenwand (76) der divergenten Klappe definiert ist, und an den jeweiligen Kühlluftumlaufkanal (70) der konvergenten Klappe angeschlossen ist,
wobei die divergente Klappe (42B) weiter eine mehrfach perforierte Platte (102) beinhaltet, die mit Prallkühlungsöffnungen (104) versehen ist, und sich zwischen der jeweiligen Innenwand (64) und der jeweiligen Außenwand (76) der divergenten Klappe erstreckt, wodurch die mehrfach perforierte Platte den jeweiligen Kühlluftumlaufkanal (78) der divergenten Klappe unterteilt in:
- Einen Hohlraum für den Kühlluftumlauf (105), der zwischen der jeweiligen Außenwand (76) der divergenten Klappe und der mehrfach perforierten Platte (102) definiert ist, und an den jeweiligen Kühlluftumlaufkanal (70) der konvergenten Klappe angeschlossen ist, und
- einen Hohlraum zur Prallkühlung (106), der zwischen der mehrfach perforierten Platte (102) und der jeweiligen Außenoberfläche (67) der jeweiligen Innenwand der divergenten Klappe definiert ist, um eine Kühlung der jeweiligen Innenwand (64) der divergenten Klappe durch Prallen von Luftstrahlen (IJ) zu ermöglichen, die durch die Prallkühlungsöffnungen (104) hindurch aus Luft (CF) gebildet werden, die in dem Hohlraum für den Kühlluftumlauf umläuft,
wobei die konvergente Klappe (42B) zwei jeweilige seitliche gegenüberliegende Abschlusswände (80) beinhaltet, die jeweils die jeweilige Innenwand (64) der divergenten Klappe mit der jeweiligen Außenwand (76) der divergenten Klappe verbinden, sodass jeder von dem Hohlraum für den Kühlluftumlauf (105) und dem Hohlraum zur Prallkühlung (106) weiter durch die beiden jeweiligen seitlichen Abschlusswände (80) der divergenten Klappe begrenzt wird,
**dadurch gekennzeichnet, dass** jede der beiden jeweiligen seitlichen Abschlusswände (80) der divergenten Klappe mit Luftdurchlassöffnungen (108) versehen ist, durch die der Hohlraum zur Prallkühlung (106) nach außen mündet.

2. Konvergent-divergentes Klappenpaar nach Anspruch 1, wobei die divergente Klappe eine jeweilige stromabwärts gelegene Abschlusswand (100) beinhaltet, die mindestens eine Öffnung (110) vorsieht, durch die der Hohlraum zur Prallkühlung (106) nach stromabwärts mündet.

3. Konvergent-divergentes Klappenpaar nach Anspruch 2, wobei die jeweilige stromabwärts gelegene Abschlusswand (100) der divergenten Klappe die jeweilige Außenwand (76) der divergenten Klappe mit der mehrfach perforierten Platte (102) der divergenten Klappe verbindet.

4. Konvergent-divergentes Klappenpaar nach einem der Ansprüche 1 bis 3, wobei die divergente Klappe (42B) eine Verschlusswand (112) beinhaltet, die die mehrfach perforierte Platte (102) der divergenten Klappe mit der jeweiligen Innenwand (64) der divergenten Klappe verbindet, um ein stromaufwärts gelegenes Ende des Hohlraums zur Prallkühlung (106) der divergenten Klappe zu schließen.

5. Düse (28) in derArt konvergent-divergent mit variabler Geometrie für ein Triebwerk, umfassend konvergent-divergente Klappenpaare, die um eine Achse (11) der Düse herum verteilt sind, und von denen mindestens bestimmte konvergent-divergente Klappenpaare nach einem der Ansprüche 1 bis 4 sind, und einen Verbrennungsgas-Umlaufkanal (39), der mindestens von den jeweiligen Innenoberflächen einer Verbrennungsgasleitung (58, 66) der jeweiligen Innenwände der jeweiligen konvergenten Klappen (40B) und der jeweiligen divergenten Klappen (42B) der konvergent-divergenten Klappenpaare nach einem der Ansprüche 1 bis 4 begrenzt wird.

6. Düse nach Anspruch 5, wobei die konvergent-divergenten Klappenpaare nach einem der Ansprüche 1 bis 4 konvergent-divergente Nachlaufklappenpaare (52B) bilden, wobei die Düse weiter gesteuerte konvergent-divergente Klappenpaare (52A) umfasst, die am Umfang abwechselnd mit den konvergent-divergenten Nachlaufklappenpaaren (52B) angeordnet sind, und jeweilige divergente Klappen (42A) umfassen, die jeweilige Wände einer Verbrennungsgasleitung (64) umfassen, die jeweilige Innenoberflächen einer Verbrennungsgasleitung (66) aufweisen, die den Verbrennungsgas-Umlaufkanal (39) begrenzen.

7. Düse nach Anspruch 6, wobei die Luftdurchlassöffnungen (108) der seitlichen Abschlusswände (80) der jeweiligen divergenten Klappen (42B) der konvergent-divergenten Nachlaufklappenpaare (52B) gegenüber den jeweiligen Wänden einer Verbrennungsgasleitung (64) der jeweiligen divergenten Klappen (42A) der gesteuerten konvergent-divergenten Klappenpaare (52A) in den Verbrennungsgas-Umlaufkanal (39) münden.

8. Düse nach Anspruch 7, wobei die jeweiligen divergenten Klappen (42A) der gesteuerten konvergent-divergenten Klappenpaare (52A) Klappen mit einfacher Hülle sind.

9. Triebwerk für ein Luftfahrzeug, umfassend einen Nachverbrennungskanal (26), der von einem Kühlungsplenum (36) umgeben ist, das von dem Nachverbrennungskanal (26) durch eine Wärmschutzauskleidung (34) getrennt ist, und eine Düse (28) nach einem der Anspruche 5 bis 8,
wobei die jeweiligen Kühlluftumlaufkanäle (70) der konvergenten Klappen (42B) der konvergent-divergenten Klappenpaare (52B) nach einem der Ansprüche 1 bis 4 der Düse an das Kühlungsplenum (36) angeschlossen sind, das den Nachverbrennungskanal (26) umgibt.

## Claims

1. Convergent-divergent flap pair (52B) for a turbojet engine nozzle (28) of the variable-geometry convergent-divergent type, comprising a convergent flap (40B), and a divergent flap (42B) mounted pivotably on the convergent flap about a pivot axis (87), whereby the convergent-divergent flap pair is capable of going from a first extreme angular configuration, in which the convergent flap and the divergent flap make between them a maximum salient angle, to a second extreme angular configuration, in which the convergent flap and the divergent flap make between them a minimum salient angle smaller than the maximum salient angle,
wherein the convergent flap includes a respective inner wall (56), having a respective inner surface for channelling combustion gas (58) and a respective outer surface (59), and a respective outer wall (60),
wherein the convergent flap includes a respective duct for circulation of cooling air (70) defined between the respective outer surface (59) of the respective inner wall of the convergent flap, and the respective outer wall (60) of the convergent flap,
wherein the divergent flap includes a respective inner wall (64), having a respective inner surface for channelling combustion gas (66) and a respective outer surface (67), and a respective outer wall (76),
wherein the divergent flap includes a respective duct for circulation of cooling air (78) defined between the respective outer surface (67) of the respective inner wall of the divergent flap, and the respective outer wall (76) of the divergent flap, and connected to the respective duct for circulation of cooling air (70) of the convergent flap,
wherein the divergent flap (42B) further includes a multiperforated plate (102) provided with impingement cooling orifices (104), and extending between the respective inner wall (64) and the respective outer wall (76) of the divergent flap, whereby the multiperforated plate divides the respective duct for circulation of cooling air (78) of the divergent flap into:
- a cavity for circulation of cooling air (105), defined between the respective outer wall (76) of the divergent flap and the multiperforated plate (102), and connected to the respective duct for circulation of cooling air (70) of the convergent flap, and
- an impingement cooling cavity (106) defined between the multiperforated plate (102) and the respective outer surface (67) of the respective inner wall of the divergent flap, to allow a cooling of the respective inner wall (64) of the divergent flap by impingement of jets of air (IJ) formed through the impingement cooling orifices (104) from air (CF) circulating in the cavity for circulation of cooling air,
wherein the divergent flap (42B) includes two opposite respective lateral end walls (80) each connecting the respective inner wall (64) of the divergent flap to the respective outer wall (76) of the divergent flap, so that each of the cavity for circulation of cooling air (105) and the impingement cooling cavity (106) is further defined by the two respective lateral end walls (80) of the divergent flap,
**characterised in that** each of the two respective lateral end walls (80) of the divergent flap is provided with air passage orifices (108) through which the impingement cooling cavity (106) opens towards the outside.

2. Convergent-divergent flap pair according to claim 1, wherein the divergent flap includes a respective downstream end wall (100) providing at least one opening (110) by which the impingement cooling cavity (106) opens downstream.

3. Convergent-divergent flap pair according to claim 2, wherein the respective downstream end wall (100) of the divergent flap connects the respective outer wall (76) of the divergent flap to the multiperforated plate (102) of the divergent flap.

4. Convergent-divergent flap pair according to any one of claims 1 to 3, wherein the divergent flap (42B) includes a closing wall (112) connecting the multiperforated plate (102) of the divergent flap to the respective inner wall (64) of the divergent flap in such a way as to close an upstream end of the impingement cooling cavity (106) of the divergent flap.

5. Nozzle (28) of the variable-geometry convergent-divergent type for a turbojet engine, comprising convergent-divergent flap pairs distributed around an axis (11) of the nozzle and at least some of which are convergent-divergent flap pairs according to any one of claims 1 to 4, and a channel for circulation of combustion gas (39) defined at least by the respective inner surfaces for channelling combustion gas (58, 66) of the respective inner walls of the respective convergent flaps (40B) and of the respective divergent flaps (42B) of the convergent-divergent flap pairs according to any one of claims 1 to 4.

6. Nozzle according to claim 5, wherein the convergent-divergent flap pairs according to any one of claims 1 to 4 form follower convergent-divergent flap pairs (52B), the nozzle further comprising controlled convergent-divergent flap pairs (52A) arranged in alternation circumferentially with the follower convergent-divergent flap pairs (52B) and comprising respective divergent flaps (42A) comprising respective walls for channelling combustion gas (64) having respective inner surfaces for channelling combustion gas (66) defining the channel for circulation of combustion gas (39).

7. Nozzle according to claim 6, wherein the air passage orifices (108) of the lateral end walls (80) of the respective divergent flaps (42B) of the follower convergent-divergent flap pairs (52B) open into the channel for circulation of combustion gas (39), facing the respective walls for channelling combustion gas (64) of the respective divergent flaps (42A) of the controlled convergent-divergent flap pairs (52A).

8. Nozzle according to claim 7, wherein the respective divergent flaps (42A) of the controlled convergent-divergent flap pairs (52A) are flaps with a simple skin.

9. Turbojet engine for an aircraft, comprising a reheat channel (26) surrounded by a cooling plenum (36) separated from the reheat channel (26) by a thermal protection liner (34), and a nozzle (28) according to any one of claims 5 to 8,
wherein the respective ducts for circulation of cooling air (70) of the convergent flaps (40B) of the convergent-divergent flap pairs (52B) according to any one of claims 1 to 4 of the nozzle are connected to the cooling plenum (36) surrounding the reheat channel (26).
